Europäisches Patentamt

European Patent Office

Office européen des brevets

(11) Numéro de publication: **0 306 458**
**A1**

## (12) DEMANDE DE BREVET EUROPEEN

(21) Numéro de dépôt: **88830061.3**

(22) Date de dépôt: **19.02.88**

(51) Int. Cl.⁴: **F 16 B 7/04**

(30) Priorité: **27.03.87 IT 936087**

(43) Date de publication de la demande:
**08.03.89 Bulletin 89/10**

(84) Etats contractants désignés:
**AT BE CH DE ES FR GB GR LI LU NL SE**

(71) Demandeur: **PEISA S.r.L.**
**Via R. Giuliani, 136**
**I-50141 Firenze (IT)**

(72) Inventeur: **Pini, Belisario**
**Via R. Giuliani, 136**
**I-50141 Firenze (IT)**

(74) Mandataire: **Martini, Lazzaro**
**Ufficio Brevetti Ing. Lazzaro Martini Via Brunelleschi, 1**
**I-50123 Firenze (IT)**

(54) Elément de connexion avec forcement élastique pour structures composées.

(57) Pour la connexion rapprochée fixe, mais amovible de deux tubes ou barres, orthogonaux non concourants, destinés à la réalisation de structures mobiles pour vitrines, pour l'éclairage, étalages commerciaux, stands et constructions composées similaires, on utilise un élément en plastique rigide de forme sensiblement parallélépipède, lequel est pourvu de deux trous transversaux traversants, à axes orthogonaux non concourants et ouverts sur toute leur longueur de manière à être calés sur chaque tube ou barre manuellement, mais avec un forcement élastique, à travers une gorge à parois convergentes vers le trou de réception correspondant. Pour la connexion rapprochée de deux ou plus de deux tubes ou barres, orientés parallèlement, les trous dudit élément présentent des axes parallèles. Et pour la connexion rapprochée d'un tube ou barre et d'un plateau ou panneau, coplanaires ou orthogonaux, un des trous dudit élément présente une forme de rainure.

Fig. 1ᴀ  Fig. 2ᴀ  Fig. 7ᴀ

Fig. 1  Fig. 2  Fig. 7

EP 0 306 458 A1

## Description

### Elément de connexion avec forcement élastique pour structures composées.

La présente invention concerne un élément en matière plastique de connexion avec forcement élastique pour structures composées, en particulier pour la réalisation de constructions mobiles pour des vitrines, l'éclairage, des étalages commerciaux, des stands et similaires.

Un tel élément permet de relier fermement, mais de manière amovible, au moins deux tubes ou barres orthogonaux non concourants ou parallèles, ou encore un tube ou barre et un panneau ou plateau, coplanaires ou orthogonaux.

Les éléments de connexion connus actuellement pour la réalisation de structures composées, sont constitués de joints en deux parties complémentaires, en métal ou en plastiqeue rigide, lesquels sont bloqués ensemble autour des tubes ou panneaux au moyen d'au moins une vis ou boulon. De tels éléments sont peu adaptés à la réalisation de petites structures amovibles car ils entraînent une installation longue et compliquée en raison de la nécessité d'utiliser un outil tel qu' un tournevis ou une clé, et présentent en outre un coût de réalisation assez élevé.

La presente invention a pour but de remédier aux inconvénients des dispositifs précédents, en réalisant un élément de connexion pour structure composée formée de tubes ou barres et de panneaux ou plateaux qui permettent une installation et un démontage rapides et simples, un blocage sûr des composants et un coût de fabrication très réduit.

Ce résultat a été atteint conformément à la présente invention en réalisant un élément en matière plastique rigide, de forme sensiblement parallélépipède, qui est pourvu d'au moins deux trous transversaux traversants, à axes orthogonaux non concourants ou parallèles, pour deux tubes ou barres correspondants, et ouverts vers l'extérieur sur toute leur longueur par l'intermédiaire d'une gorge à parois divergentes vers l'extérieur pour pouvoir être calés sur chaque tube ou barre, manuellement mais avec un forcement élastique; pour la connexion d'un panneau ou plateau avec un tube ou barre, coplanaires ou orthogonaux entre eux, un des deux trous dudit élément présente une forme de rainure. Avantageusement, les angles de la gorge d' introduction à l'intérieur de chaque trou de réception sont arrondis pour faciliter l'introduction du tube (ou barre) correspondant et chacun des trous possède un diamètre légèrement inférieur à celui du tube (barre) à recevoir pour en assurer la prise avec un bon forcement élastique.

Selon divers modes de réalisation, lesdites gorges d'introduction dans les trous correspondant sont prévues ssur la même des plus grandes faces ou dans les petites faces, ou dans une grande et dans une petite face de l'élément.

La solution proposée par la présente invention permet, grâce à la grande variété de combinaisons possibles, la réalisation de plusieurs éléments de connexion pour structure composées formées de tubes ou barres et de panneaux, d'installation simple et rapide par le seul forcement élastique sur le tube, la barre ou le panneau sans l'utilisatin d'aucun outil, et présentant un coût de fabrication très réduit du fait qu'ils peuvent être réalisés en matière plastique, par exemple le nylon 6, par moulage suivant la technique de l'injection.

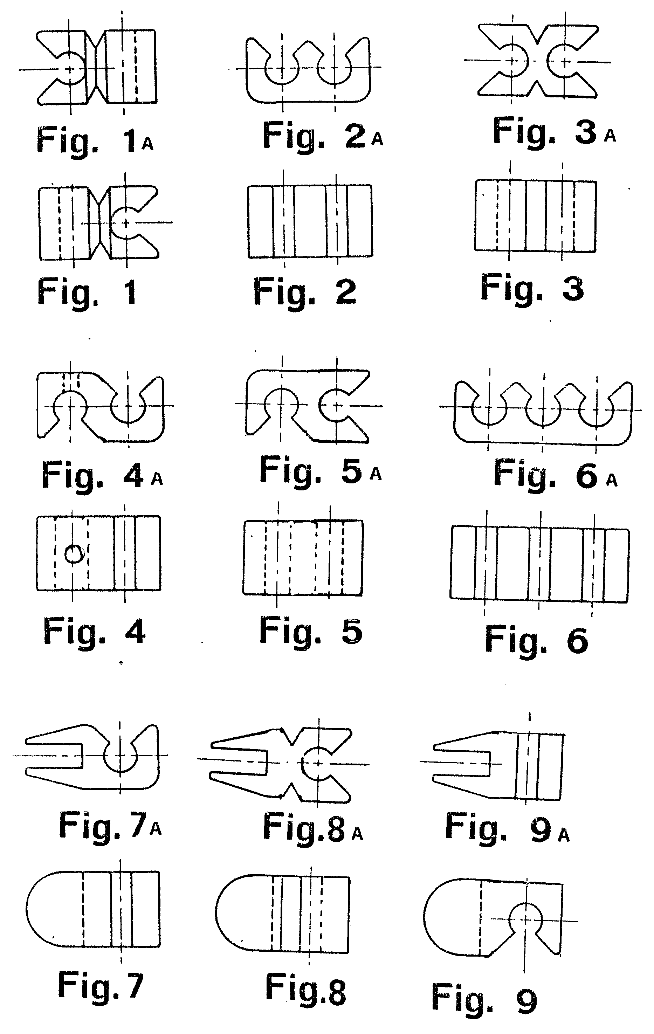

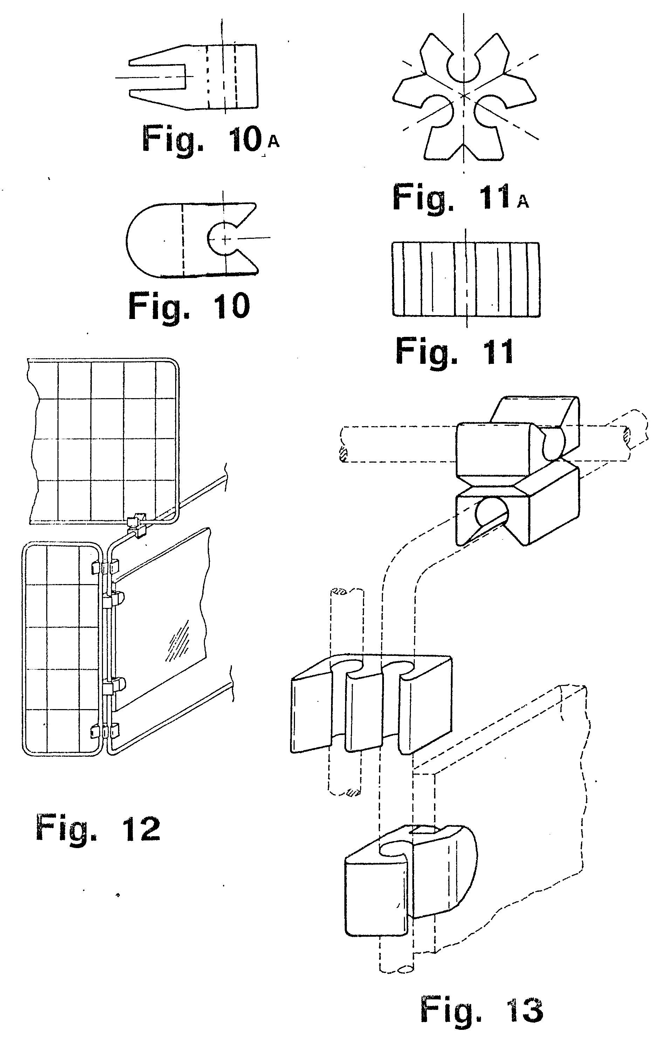

Ces avantages et caractéristiques de l'invention ainsi que d'autres, seront plus et mieux compris de chaque homme du métier à la lumière de la description qui va suivre et à l'aide des dessins annexés donnés à titre d'exemplification pratique de l'invention. mais à ne pas considérer dans le sens limitatif; dessins sur lesquels: les FIG. 1 et 1A représentent la vue en plan et la vue de face d'un élément de connexion en conformité avec l'invention pour deux tubes ou barres orthogonaux non concourants; les FIG. 2 et 2A représentent la vue en plan et la vue de face d'un élément de connexion en conformité avec l'invention pour deux tubes ou barres parallèles; le FIG. 3 et 3A représentent la vue en plan et la vue de face d'une variante de l'élément de la Fig. 2; le FIG. 4 et 4A représentent une deuxième variante de l'élément de la Fig. 2; les FIG. 5 et 5A représentent une troisième variante de l'élément de la Fig. 2; les FIG. 6 et 6A représentent une autre variante de l'élément de la Fig.2 pour la connexion de trois tubes ou barres parallèles et coplanaires; les FIG. 7 et 7A représentent la vue en plan et la vue de face d'un élément de connexion en conformité avec l'invention pour un tube ou barre et un panneau ou plateau coplanaires; le FIG. 8 et 8A représentent la vue en plan et la vue de face d'une variante de l'élément de la Fig. 7; les FIG. 9 et 9A représentent une deuxième variante de l'élément de la Fig. 7; les FIG. 10 et 10A représentent une troisième variante de l'élément de la Fig. 7; les FIG. 11 et 11A représentent la vue en plan et la vue de face d'une variante de l'élément de la Fig. 3, pour la connexion de trois tubes ou barres parallèles, disposés aux sommets d'un triangle équilatéral; la FIG. 12 représente un exemple d'application de l'élément de connexion selon l'invention pour la réalisation d'une structure composée; la FIG. 13 représente les détails agrandis des différents éléments de connexion utilisés pour la structure de la Fig. 12; les FIG. 14 et 14A représentent une variante de l'élément de la Fig.1

Limitée à sa structure essentielle et en référence aux Fig. 1 et 1A des dessins annexés, un élément pour la connexion de deux tubes ou barres orthogonaux non concourants entre eux est constitué en conformité avec l'invention d'un corps 10 en plastique rigide de forme sensiblement parallélépipède, pourvu de deux trous transversaux traversants 12 et présentant des axes orthogonaux non concourants et recoupant l'axe longitudinal du corps 10. Chacun des trous 12 est ouvert vers l'extérieur sur la petite face de l'extrémité du corps et sur toute sa longueur par l'intermédiaire d'une gorge 13 qui est délimitée par deux parois convergeant vers le trou correspondant dans le but de permettre au corps 10 d'être calé sur chaque tube ou barre, manuellement mais avec un bon forcement élastique. Avantageusement, chaque gorge 13 présente une ouverture angulaire sensiblement égale à 90° et dont le sommet est légèrement décalé vers l'extérieur par rapport à l'axe du trou. De cette manière la paroi interne de chaque trou 12 présente un développement angulaire légèrement supérieur à 270° pour réaliser une prise sûre d'un tube ou d'une barre correspondant, introduit à force dedans à travers ladite gorge 13; avantageusement, les arêtes de chaque gorge 13 sont arrondis pour faciliter l'introduction du tube ou barre correspondant et chaque trou présente un diamètre légèrement inférieur à celui du tube correspondant à insérer pour en assurer la prise avec un bon forcement élastique. Enfin, le corps 10 est pourvu d'une incision périphérique médiane 15 pour permettre d'améliorer la capacité de déformation élastique des deux bras qui délimitent chaque trou 12 pendant l'introduction d'un tube ou barre correspondant.

En référence aux Fig. 14 et 14A qui représentent une variante des Fig. 1 et 1A, l'élément de connexion de deux tubes ou barres orthogonaux non concourant possède un corps 140 pourvu de deux trous transversaux traversant 142 ouverts vers l'extérieur par l'intermédiaire de sgorges 143 en correspondance d'une face latérale et d'une face d'extrémité du corps 140, respectivement.

En référence aux Fig. 2 et 2A des dessins annexés, un élément en conformité avec l'invention, pour la connexion de deux tubes ou barres orientés parallèlement, est constitué d'un corps 20 en plastique rigide de forme essentiellement parallélépipède, pourvu de deux trous transversaux traversants 22 ayant des axes parallèles et recoupant l'axe longitudinal du corps 20. Chaque trou 22 est ouvert vers l'extérieur sur une même grande face du corps 20, sur toute sa longueur, par l'intermédiaire d'une gorge 23 à parois 24 convergentes vers le trou correspondant, pour permettre au corps 20 d'être calé manuellement et avec un forcement élastique sur deux tubes ou barres parallèles à relier ensemble. Les caractéristiques des gorges et des trous correspondants, et c'est à dire l'angle d'ouverture et les arêtes des gorges et le diamètre des trous. sont identiques à celles de l'élément de la Fig. 1.

En référence aux Fig. 3 et 3A des dessins annexés, et qui représentent une variante de l'élément des Fig. 2 et 2A, le corps 30 est pourvu des trous transversaux traversants 32, à axes parallèles et recoupant l'axe du corps 30, chacun desquels est ouvert vers l'extérieur le long d'une petite face du corps et sur toute sa longueur par l'intermédiaire d'une gorge 33 de forme et dimensions identiques à celles de la gorge 23 des Fig. 2 et 2A.
Ledit corps 30 est en outre pourvu, en correspondance de chaque grande face, d'une incision transversale médiane 35 pour permettre d'améliorer la capacité de déformation elastique des deux bras qui délimitent chaque trou pendant l'introduction d'un tube ou barre correspondant.

En référence aux Fig. 4 et 4A des dessins annexés, le corps 40 est pourvu de deux trous 42 transversaux et traversant, ayant des axes parallèles et recoupant l'axe principal du corps, ces trous étant ouverts vers l'extérieur en correspondance des deux grandes faces opposées du corps 40. Au moins un des trous 42 est avantageusement recoupé par un trou traversant 41, perpendiculaire à la grande face correspondante du corps pour permettre le fixage de l'élément à une paroi portante, à l'aide de moyens traditionnels.

En référence aux Fig. 5 et 5A des dessins annexés, le corps 50 est pourvu de deux trous tansversaux traversants 52, à axes parallèles et recoupant l'axe principal du corps, ces trous étant ouverts vers l'extérieur en correspondance d' une grande face et d'une petite face d'extrémité du corps 50 respectivement.

En référence aux Fig. 6 et 6A des dessins annexés, qui représentent une variante des Fig. 2 et 2A, l'élément qui est adapté pour la connexion de trois tubes parallèles coplanaires, a son corps 60 en plastique rigide de forme essentiellement parallélépipède, allongée de manière à permettre la réalisation de trois trous transversaux à axes parallèles, coplanaires et recoupant l'axe longitudinal du corps 60 et ouverts vers l'extérieur dans une grande face du corps 60 par l'intermédiaire de trois gorges 63 à parois convergentes vers le trou correspondant.

En référence aux Fig. 7 et 7A des dessins annexés, un élément en conformité avec l'invention, pour la connexion d'un tube ou barre et d'un panneau ou plateaux coplanaires, est constitué d'un corps 70 en matière plastique rigide de forme essentiellement parallélépipède, pourvu d'un seul trou transversal traversant 72 dont l'axe recoupe l'axe longitudinal du corps 70 et qui est ouvert vers l'extérieur le long d'une grande face du corps au moyen d'une gorge 73 tout à fait similaire à la gorge 23 de l'élément des Fig. 2 et 2A et d'une profonde rainure transversale ouverte sur une petite face du corps 70. Ladite rainure 71 présente une section rectangulaire avec fond plat et une largeur sensiblement égale à celle du panneau à supporter. Les parois externes du corps 70 qui délimitent ladite rainure 71 sont avantageusement convergentes vers l'extrémité libre et présentent des arêtes transversales arrondies. Dans le plan longitudinal de symétrie de laidite rainure 71, sont inclus l'axe longitudinal du corps 70 et l'axe du trou 72 de manière que le panneau et le tube ou barre insérés respectivement dans la rainure 71 et dans le trou 72, soient coplanaires. Avec un tel élément il est possible de fixer un panneau polygonal ou circulaire de verre, de métal ou de plastique, à l'intérieur ou juxtaposé à une structure possédant un profil géométriquement similaire, au moyen de plusieurs éléments opportunément répartis le long du périmètre ou de la circonférence.

En référence aux Fig. 8 et 8A des dessins annexés, qui représentent une variante de l'élément des Fig. 7 et 7A, le corps 80 a le trou 82 ouvert vers l'extérieur le long de la petite face du corps qui est situé du côte opposé à l'ouverture de la rainure 81. Ledit corps 80 est en outre pourvu, en correspondance de chaque grande face, d'une incision transversale médiane 85 pour permettre d'améliorer la capacité de déformation élastique des bras qui délimitent le trou 82 et la rainure 81 pendant l'introduction, respectivement, d'un tube ou barre et d'une plaque ou panneau. Un tel élément est particulièrement avantageux pour relier de manière sûre un tube ou barre horizontal et un panneau vertical situé au-dessus.

En référence aux Fig. 9 et 9A des dessins annexés, un élément en conformité avec l'invention pour la connexion d'un tube ou barre et d'un panneau ou plateau, perpendiculaires entre eux, est constitué d'un corps 90 en plastique rigide avec une rainure 91 et un trou transversal traversant 92, dont l'axe est perpendiculaire à celui de la rainure 91 et qui est ouvert vers l'extérieur en correspondance d'une face latérale qui est orthogonale au plan axial de laidite rainure.

En référence au Fig. 10 et 10A des dessins annexés, le corps 100 est pourvu d'une rainure 101 et d'un trou 102 dont l'axe est perpendiculaire à celui de la rainure 101 et qui est ouvert vers l'extérieur en correspondance de la petite face du corps qui est opposée à l'ouverture de la rainure 101.

En référence aux Fig. 11 et 11A des dessins annexés, qui représentent une variante des Fig. 3 et 3A, l'élément selon l'invention, qui est adapté pour la connexion de trois tubes ou barres parallèles dont les axes coupent les sommets d'un triangle équilatéral, a le corps 110 de forme essentiellement prismatique avec section hexagonale, lequel est pourvu de trois trous transversaux traversants 112 avec axes parallèles à l'axe transversal de l'élément et angulairement équidistants, avec chaque trou ouvert vers l'extérieur le long du côté respectif de l'hexagone et sur toute sa longueur, au moyen d'une gorge 113 à parois convergentes vers le trou correspondant. Chacune des trois faces latérales du corps 110 auxquelle ne correspondent aucun trou est pourvue d'une incision transversale 115 pour permettre d'améliorer la capacité de déformation des bras qui délimitent chaque trou 112 pendant l'introduction d'un tube ou barre.
Tous les éléments de connexion décrits et illustrés sont réalisés en plastique rigide, par exemple du nylon 6, par moulange suivant la technique de l'injection.

En référence aux Fig. 12 et 13 des dessins annexés, qui représentent un exemple de structure composée tridimensionnelle avec des cadres et des pannaux dont l'interconnexion est réalisée au moyen de plusieurs éléments de connexion selon l'invention, opportunément choisis parmi ceux décrits précédemment, ladite structure dans la partie représentée, est composée de trois cadres 121, 122, 123 et d'un panneau 124, lesquels sont reliés entre eux au moyen d'un élément 10 del la Fig. 1, de deux éléments 20 de la Fig. 2 et de deux éléments 70 de la Fig. 7.

**Revendications**

1) Elément de connexion avec forcement élastique pour structures composées formées de tubes ou barres et de panneaux ou plateaux, caractérisé en ce que pour permettre de relier ensemble au moins deux tubes ou barres, manuellement mais avec un forcement élastique approprié, il est constitué d'un corps de forme essentiellement parallélépipède, pourvu d'au moins deux trous transversaux et traversant, à axes parallèles ou perpendiculaires non concourants et communicants avec l'extérieur sur toute leur longueur par l'intermédiaire d'une gorge à parois convergentes vers l'intérieur.

2) Elément de connexion selon la revendication 1, caractérisé en ce que ledit corps a les trous pour la mise en place des tubes ou barres avec les axes parallèles et avec les gorges respectives de communication desdits trous avec l'extérieur prévues dans la même face du corps.

3) Elément de connexion selon la revendication 1, caractérisé en ce que ledit corps a les trous pour la mise en place des tubes ou barres avec les axes parallèles et avec les gorges de communication desdits trous avec l'extérieur prévues dans deux faces opposées du corps.

4) Elément de connexion selon la revendication 1 caractérisé en ce que ledit corps a les trous pour la mise en place des tubes ou barres avec les axes parallèles et avec les gorges de communication desdits trous avec l'extérieur prévues respectivement dans une des faces latérales et dans une des faces d'extrémité du corps.

5) Elément de connexion selon la revendication 1, caractérisé en ce que ledit corps présente une forme sensiblement prismatique et a les trous pour la mise en place des tubes ou barres avec les axes parallèles et dont les axes coïncident avec les sommets d'un polygone régulier.

6) Elément de connexion selon la revendication 1, caractérisé en ce que ledit corps a les trous pour la mise en place des tubes ou barres avec les axes perpendiculaires non concourants et avec les gorges de communication desdits trous avec l'extérieur prévues sur les faces opposées d'extrémité du corps

7) Elément de connexion selon la revendication 1, caractérisé en ce que ledit corps a les trous pour la mise en place des tubes ou barres avec les axes perpendiculaires non concourants et avec les gorges de communication desdits trous avec l'extérieur prévues respectivement dans une des faces latérales et dans une des faces d'extrémité du corps.

8) Elément de connexion selon la revendication 3, caractérisé en ce que le corps est pourvu de deux rainures transversales médianes suivant une direction parallèle à l'axe des trous pour permettre d'augmenter la capacité de déformation élastique des parois qui délimitent les trous.

9) Elément de connexion selon la revendication 6, caractérisé en ce que le corps est pourvu d'une rainure périphérique, transversale, médiane pour permettre d'augmenter la capacité de déformation élastique des parois qui délimitent les trous.

10) Elément de connexion avec forcement élastique pour structures compsées formées de tubes ou barres et de panneaux ou plateaux, caractérisé en ce que, pour permettre de relier ensemble un panneau ou plateau à au moins un tube ou barre coplanaires, il est constitué d'un corps de forme essentiellement parallélépipède, pourvu d'au moins un trou transversal et traversant et communicant avec l'extérieur sur toute sa longueur par l'intermédiaire d'une gorge à parois convergentes vers l'intérieur et d'une rainure tranversale traversante et ouvert vers l'extérieur sur toute sa longueur et dont le plan de symétrie est coplanaire avec l'axe dudit trou.

11) Elément de connexion selon la revendication 10, caractérisé en ce que la largeur de ladite rainure est égale ou légèrement inférieure à l'épaisseur du panneau ou plateau à relier.

12) Elément de connexion selon les revendications 10 et 11, caractérisé en ce que les arêtes longitudinales qui delimitent ladite rainure sont arrondies dans le sens de leur longueur et de leur épaisseur.

13) Elément de connexion selon l'une quelconque des revendications précédentes, caractérisé en ce que les parois latérales qui délimitent les gorges de communication des trous avec l'extérieur forment un angle sensiblement égale à 90° et avec le sommet légèrement décalé vers l'extérieur par rapport à l'axe du trou correspondant.

14) Elément de connexion selon l'une quelconque des revendications précédentes, caractérisé en ce que les arêtes de chaque gorge de communication d'un trou avec l'extérieur sont arrondis pour faciliter l'introduction du tube ou de la barre.

15) Elément de connexion selon l'une quelconque des revendications précédentes, caractérisé en ce que chaque trou a un diamètre légèrement inférieur à celui du tube ou barre correspondant à caler.

16) Elément de connexion selon l'une quelconque des revendications précédentes, caractérisé en ce qu'au moins un desdits trous est recoupé perpendiculairement par un trou traversant prévu dans une correspondante face latérale du corps.

17) Elément de connexion selon l'une quelconque des revendications précédentes, caractérisé en ce qu'il est d'une seule pièce réalisée en plastique rigide, de préférence en nylon, par moulage suivant la technique de l'injection.

EP 0 306 458 A1

Fig. 1A

Fig. 2A

Fig. 3A

Fig. 1

Fig. 2

Fig. 3

Fig. 4A

Fig. 5A

Fig. 6A

Fig. 4

Fig. 5

Fig. 6

Fig. 7A

Fig. 8A

Fig. 9A

Fig. 7

Fig. 8

Fig. 9

**Fig. 10 A**

**Fig. 11 A**

**Fig. 10**

**Fig. 11**

**Fig. 12**

**Fig. 13**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 195 942  (KESTNER)<br>* figures; revendications; abrégé * | 1 | F 16 B    7/04 |
| A | | 2-4,6,7,17 | |
| Y | FR-A-1 246 185  (ETS. PAUL ESCAUT)<br>* figures 1-4,9; résumé; page 2, colonne de droite, lignes 10-21 * | 1-7 | |
| A | | 10,11,17 | |
| Y | DE-A-3 040 894  (WINKLER)<br>* figure 1 * | 1-7 | |
| A | | 13 | |
| A | DE-A-3 341 929  (BEITZ)<br>* figures 1,4 * | 1,10,13 | |
| A | US-A-3 360 883  (GLANZER)<br>* figures 1,3; abrégé * | 1 | |

DOMAINES TECHNIQUES
RECHERCHES (Int. Cl.4)

F 16 B    2/00
F 16 B    5/00
F 16 B    7/00
F 16 B    9/00
F 16 B   12/00
F 16 L    3/00

Le présent rapport a été établi pour toutes les revendications

| Lieu de la recherche | Date d'achèvement de la recherche | Examinateur |
|---|---|---|
| BERLIN | 05-12-1988 | SCHAEFFLER C.A.A. |